# EUROPÄISCHE PATENTSCHRIFT

(11) **EP 4 149 017 B1**
(45) Veröffentlichungstag und Bekanntmachung des Hinweises auf die Patenterteilung: **16.04.2025**
(21) Anmeldenummer: 22188600.5
(22) Anmeldetag: 03.08.2022
(51) Int. Cl.: H04B 7/155

(54) **VERFAHREN ZUM DRAHTLOSEN SENDEN VON ZUMINDEST EINER NACHRICHT VON EINEM REPEATER AN EINEN EMPFÄNGER ÜBER EINEN DRAHTLOSEN ÜBERTRAGUNGSKANAL**
METHOD FOR WIRELESS TRANSMISSION OF AT LEAST ONE MESSAGE FROM A REPEATER TO A RECEIVER OVER A WIRELESS TRANSMISSION CHANNEL
PROCÉDÉ DE TRANSMISSION SANS FIL D'AU MOINS UN MESSAGE D'UN RÉPÉTEUR À UN RÉCEPTEUR PAR L'INTERMÉDIAIRE D'UN CANAL DE TRANSMISSION SANS FIL

(30) Priorität: 09.09.2021 DE 102021123398
(43) Veröffentlichungstag der Anmeldung: 15.03.2023
(73) Patentinhaber: Westnetz GmbH, 44139 Dortmund (DE)
(72) Erfinder: Schmidt, Eugen, 46487 Wesel (DE)
(74) Vertreter: Bals & Vogel Patentanwälte PartGmbB

(56) Entgegenhaltungen:
- US-A1- 2013 237 777
- US-A1- 2015 156 652
- US-A1- 2016 021 433

## Beschreibung

Die Erfindung betrifft ein Verfahren zum drahtlosen Senden von zumindest einer Nachricht von einem Repeater an einen Empfänger über einen drahtlosen Übertragungskanal. Ferner betrifft die Erfindung einen Repeater mit Mitteln zur Ausführung des Verfahrens, ein System mit dem Repeater, ein Computerprogramm sowie ein computerlesbares Speichermedium mit dem Computerprogramm.

Zur Erhöhung von Funkreichweiten einer drahtlosen Nachrichtenübertragung zwischen einem Zähler und/oder einer Steuereinheit eines Gebäudes oder mehrerer Gebäude und einem Empfänger sind Repeater (auf Deutsch häufig auch als Wiederholer oder Verstärker bezeichnet) bekannt, welche typischerweise am Rande einer entstehenden Funkzelle des Zählers und/oder der Steuereinheit installiert werden, die die Nachrichten drahtlos mittels Funktechnologie an den Empfänger senden soll. Derartige Repeater empfangen die Reichweite am Rande der Funkzelle und senden die Nachricht erneut drahtlos mittels derselben Funktechnologie an den Empfänger. Dadurch kann die Reichweite der Zähler und/oder Steuereinheiten wirksam erhöht werden.

Eine drahtlose Kommunikation auf Funkbasis ist jedoch keine unbegrenzt zur Verfügung stehende Ressource. Stattdessen haben drahtlose Übertragungskanäle auf Basis eines Funkprotokollstapels mit einem vorgegebenen Frequenzbereich typischerweise nur einen begrenzten Auslastungsgrad, den sie nutzen dürften. Unter dem Auslastungsgrad, der im Englischen auch als "Duty-Cycle" bezeichnet wird, wird dabei das Verhältnis einer Sendezeit, also der Zeit, in der von einem Gerät Nachrichten in dem Frequenzbereich versendet werden, zu einer vorgegebenen Zeitperiode von beispielsweise einer Stunde verstanden. Gerade bei der Nutzung von lizenzfreien Frequenzbereichen sind die zulässigen bzw. maximalen Auslastungsgrade je Gerät streng limitiert und dürfen nicht überschritten werden, damit die den Frequenzbereich nutzenden Kommunikationsteilnehmer den Frequenzbereich nicht vollständig belegen, was bei der Nachrichtenübertragung zu Kollisionen und einem Verlust der Nachrichten führen kann.

Wie bei allen Kommunikationsgeräten wird auch bei einem Repeater als Kommunikationsgerät in dem besagten Funkprotokollstapel mit dem vorgegebenen Frequenzbereich daher von einem maximalen Auslastungsgrad ausgegangen, der nicht überschritten werden darf. Der maximale Auslastungsgrad gibt eine maximale Sendezeit des Repeaters für fortlaufende und in ihrer Dauer vordefinierte Zeitperioden vor. Im Beispiel der vordefinierten Zeitperioden von einer Stunde beispielsweise kann der Repeater jeweils eine bestimmte Sendezeit, beispielsweise von 3,6 Sekunden, in Anspruch nehmen. Dies entspricht einem maximalen Auslastungsgrad bzw. einem Duty-Cycle von 0,1 %. Mit anderen Worten darf der Repeater und auch jedes andere Kommunikationsgerät maximal 0,1 % der vordefinierten Zeitperiode, im vorliegenden Beispiel von einer Stunde und damit 3,6 Sekunden, Nachrichten über den drahtlosen Übertragungskanal mit dem Funkprotokollstapel mit dem vorgegebenen Frequenzbereich senden. Diese vordefinierte Zeitperiode wiederholt sich bzw. ist fortlaufend. Das heißt, dass der Repeater und alle anderen Kommunikationsgeräte, die über den Funkprotokollstapel mit dem vorgegebenen Frequenzbereich kommunizieren, während jeder neu angebrochenen Stunde erneut die maximale Sendezeit, im vorliegenden Beispiel von 3,6 Sekunden, nutzen dürfen.

Stand der Technik in diesem Bereich ist US 2013/0237777 A1, wo ein drahtloses Netzwerk offenbart ist, in dem medizinische Sensor Daten über Sende/Empfänger weitergeleitet werden. Aktuelle Information zum Auslastungsgrad der Übertragungsfrequenzen entsprechend zum maximalen Auslastungsgrad werden bestimmt, signalisiert und benutzt.

US 2016/0021433 A1 offenbart für ein drahtloses Netzwerk Batterie betriebener Sensoren das Weiterleiten von Daten durch Relais. Daten werden im Relais zwischengespeichert und die zeitliche Terminierung des Sendens der Daten basiert auf dem Auslastungsgrad Limit des Relais.

Im Stand der Technik kann es passieren, dass der Repeater eine Anzahl und/oder Größe an Nachrichten in einer vordefinierten Zeitperiode, also etwa der beispielhaften Stunde, empfängt, die insbesondere von mehreren unterschiedlichen Zählern und/oder Steuereinheiten eines Gebäudes oder mehrerer Gebäude gesendet worden sein können, und dass dem Repeater die maximale Sendezeit, die ihm gemäß dem maximalen Auslastungsgrad bzw. Duty-Cycle zusteht, nicht genügt, um sämtliche der empfangenen Nachrichten in der vordefinierten Zeitperiode sofort an den Empfänger zu senden bzw. weiterzuleiten. Mit anderen Worten ausgedrückt benötigt der Repeater mehr Sendezeit, als ihm zur Verfügung steht. Er müsste den maximalen Auslastungsgrad bzw. Duty-Cycle als Bedingung verletzen, was nicht zulässig ist. Deshalb leiten aus dem Stand der Technik bekannte Repeater Nachrichten nicht mehr weiter, wenn ein aktueller Auslastungsgrad bereits dem maximalen Auslastungsgrad entspricht. Dies führt zwangsläufig zu einem Verlust von Nachrichten und der darin enthaltenen Informationen, da diese den Empfänger nicht mehr erreichen können.

Aufgabe der Erfindung ist es entsprechend, ein verbessertes Verfahren zum drahtlosen Senden von zumindest einer Nachricht von einem Repeater an einen Empfänger über einen drahtlosen Übertragungskanal anzugeben, welches die vorstehend beschriebenen Nachteile nicht mehr aufweist, insbesondere zu keinem Nachrichten- und Informationsverlust mehr führt und die verzögerte Übertragung zeitkritischer Information verringert.

Die voranstehende Aufgabe wird durch die Gegenstände der Patentansprüche gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Verfahren offenbart sind, selbstverständlich auch im Zusammenhang mit dem erfindungsgemäßen Repeater, System, Computerprogram, computerlesbaren Speichermedium und umgekehrt, sodass bezüglich der Offenbarung zu den einzelnen Erfindungsaspekten stets wechselseitig Bezug genommen wird beziehungsweise werden kann.

Ein erster Aspekt ist gegeben durch ein Verfahren zum drahtlosen Senden von zumindest einer Nachricht von einem Repeater an einen Empfänger über einen drahtlosen Übertragungskanal auf Basis eines Funkprotokollstapels. Der Funkprotokollstapel weist einen vorgegebenen Frequenzbereich und einen maximalen Auslastungsgrad des Frequenzbereichs durch den Repeater auf. Der maximale Auslastungsgrad gibt eine maximale Sendezeit des Repeaters für sich wiederholende und in ihrer Dauer vordefinierte Zeitperioden vor. Das Verfahren die weist folgenden Schritte auf:
- Empfangen der zumindest einen Nachricht von zumindest einem Zähler und/oder zumindest einer Steuereinheit von einem oder mehrerer Gebäude durch den Repeater,
- Bestimmen eines aktuellen Auslastungsgrades des Frequenzbereichs des drahtlosen Übertragungskanals durch den Repeater, wobei der aktuelle Auslastungsgrad eine bisherige Sendezeit des Repeaters in einer aktuellen der sich wiederholenden und vordefinierten Zeitperioden angibt, und
- lokales Zwischenspeichern der zumindest einen empfangenen Nachricht auf dem Repeater, sofern der aktuelle Auslastungsgrad den maximalen Auslastungsgrad erreicht hat oder der aktuelle Auslastungsgrad durch Senden der zumindest einen empfangenen Nachricht den maximalen Auslastungsgrad überschreiten würde.

Die empfangenen Nachrichten können bei verfügbarer Sendezeit des Repeaters, das heißt wenn der aktuelle Auslastungsgrad noch nicht dem maximalen Auslastungsgrad entspricht und diesen mit Senden der Nachricht auch nicht überschreitet, an den Empfänger über den drahtlosen Übertragungskanal gesendet werden. Insoweit kann das Verfahren als Alternative zum lokalen Zwischenspeichern einen Schritt eines Veranlassens eines Sendens der zumindest einen empfangenen Nachricht von dem Repeater an den Empfänger umfassen, sofern die zumindest eine empfangene Nachricht an den Empfänger versendet werden kann, ohne dass der aktuelle Auslastungsgrad größer als der maximale Auslastungsgrad wird, insbesondere sofern der aktuelle Auslastungsgrad kleiner als der maximale Auslastungsgrad ist. Die Erfindung setzt dabei dort an, wo der maximale Auslastungsgrad erreicht wird. Dazu wird vorgeschlagen, dass in einer vordefinierten Zeitperiode, in der der aktuelle Auslastungsgrad dem maximalen Auslastungsgrad entspricht oder keine weiteren Nachrichten mehr ohne Überschreitung des maximalen Auslastungsgrads versendet werden können, die empfangenen Nachrichten lokal, also auf dem Repeater, zwischengespeichert werden, damit diese Nachrichten nicht verloren gehen.

Für die Bestimmung dessen, ob die zumindest eine empfangene Nachricht an den Empfänger versendet werden kann, ohne dass der aktuelle Auslastungsgrad größer als der maximale Auslastungsgrad wird bzw. diesen überschreitet, kann in einem Schritt des Verfahrens ein Vergleichen des aktuellen Auslastungsgrades mit dem maximalen Auslastungsgrad erfolgen. Insbesondere kann dabei eine Differenz einer ggf. noch verfügbaren Sendezeit gebildet werden. Mit anderen Worten kann die bisherige Sendezeit von der maximalen Sendezeit subtrahiert werden. Dies ergibt die innerhalb der vordefinierten Zeitperiode noch verfügbare Sendezeit. Für die jeweils nächste empfangene Nachricht, die in der vordefinierten Zeitperiode übersendet werden soll, kann in einem optionalen und noch weiteren Schritt des Verfahrens die notwendige Sendezeit, insbesondere anhand zumindest eines Parameters der Nachricht, wie beispielsweise einer Größe der Nachricht, bestimmt bzw. geschätzt werden. Wenn der Schätzwert der notwendigen Sendezeit für die nächste Nachricht die verfügbare Sendezeit überschreitet, dann kann bestimmt werden, dass die zumindest eine empfangene Nachricht nicht an den Empfänger versendet werden kann, ohne dass der aktuelle Auslastungsgrad größer als der maximale Auslastungsgrad wird. Anderenfalls kann ein Veranlassen eines Versendens der Nachricht erfolgen, wie zuvor erläutert worden ist, weil die notwendige Sendezeit geringer als die in der vordefinierten Zeitperiode noch verfügbare Sendezeit ist.

Das vorgeschlagene Verfahren kann dabei vollständig computerimplementiert sein bzw. können einige oder sämtliche Verfahrensschritte des Verfahrens durch einen Computer ausführbar sein und ausgeführt werden.

Insbesondere können auch mehrere, ganz besonders verschiedene, Nachrichten empfangen und versendet werden. Mit anderen Worten kann das Verfahren für mehrere Nachrichten ausgeführt werden.

Das Verfahren kann selbstverständlich die weiteren Verfahrensschritte umfassen, die dem Empfangen der zumindest einen Nachricht vorgehen und dem Veranlassen des Sendens der zumindest einen empfangenen Nachricht nachfolgen. So kann das Verfahren auch einen Schritt des Sendens der zumindest einen Nachricht von dem zumindest einen Zähler und/oder der zumindest einen Steuereinheit des einen oder der mehreren Gebäude an den Repeater umfassen. Auch kann das Verfahren den Schritt des Sendens der zumindest einen empfangenen Nachricht von dem Repeater an den Empfänger umfassen, welcher seiner Veranlassung folgen kann, die insoweit von einem Computer ausgeführt werden kann, während das eigentliche Senden durch eine entsprechende Kommunikationseinheit bzw. Sendeinheit des Repeaters erfolgen kann, welche den drahtlosen Übertragungskanal herstellt bzw. auf Basis des Funkprotokollstapels mit dem vorgegebenen Frequenzbereich arbeitet.

Es ist vorgesehen, dass das Verfahren ferner den Schritt eines Veranlassens eines Sendens der zumindest einen empfangenen und lokal auf dem Repeater zwischengespeicherten Nachricht aufweist, sobald der aktuelle Auslastungsgrad unterhalb des maximalen Auslastungsgrads liegt und der aktuelle Auslastungsgrad durch Senden der zumindest einen empfangenen Nachricht den maximalen Auslastungsgrad nicht überschreiten würde. Die Bestimmung der Sendezeit kann wie oben geschildert erfolgen. Das Veranlassen des Sendens der Nachricht kann entsprechend in einer weiteren der sich wiederholenden bzw. fortlaufenden Zeitperioden erfolgen, nachdem eine bisherige bzw. aktuelle Zeitperiode, in der der aktuelle Auslastungsgrad bereits dem maximalen Auslastungsgrad entspricht oder zumindest bereits so hoch ist, dass keine weitere Nachricht mehr vollständig ohne Überschreitung des maximalen Auslastungsgrads mehr versendet werden kann, abgelaufen ist, da der neue Auslastungsgrad in der neuen Zeitperiode null beträgt bzw. noch keine Auslastung erfolgt ist. Dadurch wird einerseits sichergestellt, dass die zwischengespeicherten Nachrichten auch von dem Empfänger empfangen werden können bzw. nicht verloren gehen und dass diese zeitig bzw. ohne allzu große Verzögerung vom Empfänger empfangen werden können.

Außerdem ist vorgesehen, dass Adressen von Zählern und/oder Steuereinheiten, welche verschiedenen empfangenen Nachrichten zugehörig sind, mit einer vorgegebenen Priorisierung von verschiedenen Adressen von Zählern und/oder Steuereinheiten verglichen werden. Das Veranlassen des Sendens oder Zwischenspeicherns der mehreren empfangenen Nachrichten erfolgt dann in einer der vorgegebenen Priorisierung entsprechenden Reihenfolge. Das heißt, dass die Zähler und/oder Steuereinheiten, die an den Repeater Nachrichten übertragen, jeweils eine Adresse für die zwischen den Zählern und/oder Steuereinheiten und dem Repeater genutzte drahtlose Nachrichtenübertragung aufweisen. Für die drahtlose Nachrichtenübertragung zwischen den Zählern und/oder Steuereinheiten und dem Repeater kann dabei ebenfalls ein drahtloser Übertragungskanal auf Basis eines Funkprotokollstapels mit einem vorgegebenen Frequenzbereich verwendet werden, wobei der Funkprotokollstapel mit dem Frequenzbereich der gleiche wie der des Repeaters sein kann. Die Adresse kann von dem Repeater erfasst werden, um die Zähler und/oder Steuereinheiten zu identifizieren. Nun wird mit der Priorisierung eine Art Rangfolge vorgegeben, in der die zwischengespeicherten Nachrichten versendet werden. Entsprechend können in einer vordefinierten Zeitperiode, in der der aktuelle Auslastungsgrad kleiner als der maximale Auslastungsgrad ist bzw. noch Sendezeit für den Repeater zur Verfügung steht, diejenigen Nachrichten als erstes versendet werden, die eine hohe Priorisierung haben. Andere Nachrichten mit einer geringeren Priorisierung können bei begrenzter Sendezeit dann auch später, insbesondere in einer kommenden vordefinierten Zeitperiode, versendet werden.

Dabei ist vorgesehen, dass die vorgegebene Priorisierung auf Basis einer Häufigkeit des Empfangs der jeder Adresse zugehörigen Nachrichten in einer vorbestimmten Zeitperiode bestimmt wird. Mit anderen Worten kann die Häufigkeit der empfangenen Nachricht jeder Zähler und/oder Steuereinheit ermittelt werden. Die Häufigkeit ist die Anzahl empfangener Nachrichten pro Zeiteinheit, beispielsweise Tag, Stunden oder auch der vordefinierten Zeitperiode. Für jeden Zähler und/oder jede Steuereinheit bzw. die ihr zugehörigen Adressen kann dann derart priorisiert werden, dass Adressen bzw. Zähler und/oder Steuereinheiten mit großer Häufigkeit oder, mit anderen Worten, Frequenz der Nachrichten gegenüber solchen Adressen priorisiert werden, die eine geringere Häufigkeit bzw. Frequenz aufweisen, also weniger häufig pro Zeiteinheit versendet werden. Wenn beispielsweise ein erster Zähler und/oder eine erste Steuereinheit mit einer ersten Adresse alle 15 Minuten eine Nachricht versendet und ein zweiter Zähler und/oder eine zweite Steuereinheit mit einer zweiten Adresse alle 300 Minuten eine Nachricht versendet, dann kann die Priorität der ersten Adresse in der Priorisierung höher als die der zweiten Adresse bestimmt bzw. vorgegeben werden. Im einfachsten Falle kann die Priorisierung dabei als eine Tabelle organisiert bzw. ausgestaltet sein, in der die Adressen ihrer Priorität nach geordnet bzw. durchnummeriert sind. Entsprechend ihrer Ordnung bzw. Durchnummerierung können dann auch die den Adressen zugehörigen und zwischengespeicherten Nachrichten versendet werden. Im angegebenen Beispiel der beiden Zähler und/oder Steuereinheiten kann so gewährleistet werden, dass die Nachrichten der ersten Adresse, die mit der wesentlich größeren Häufigkeit bzw. Frequenz versendet werden, schneller beim Empfänger ankommen können, als die der zweiten Adresse, die der geringen Häufigkeit folgend weniger zeitkritisch sind als die der ersten Adresse.

Vorgesehen werden kann auch, dass eine der zumindest einen empfangenen Nachricht zugehörige Adresse des zumindest einen Zählers und/oder der zumindest einen Steuereinheit mit einer Positivliste von verschiedenen Adressen von Zählern und/oder Steuereinheiten verglichen wird. Das Veranlassen des Sendens oder das lokale Zwischenspeichern der zumindest einen empfangenen Nachricht kann entsprechend nur dann erfolgen, wenn die der zumindest einen empfangenen Nachricht zugehörige Adresse sich auf der Positivliste befindet. Der Repeater kann nun über eine Positivliste (im Englischen auch als "White-List" bezeichnet) verfügen, die insbesondere auf einem Speichermedium des Repeaters gespeichert sein kann, mit der er die Adresse der empfangenen Nachricht abgleicht. Wenn die Adresse in der Positivliste vorhanden ist, kann der Repeater die Nachricht abhängig vom aktuellen Auslastungsgrad an den Empfänger senden oder lokal zwischenspeichern. Wenn die Adresse nicht in der Positivliste vorhanden ist, dem Repeater also nicht bekannt ist, kann die Nachricht ignoriert werden bzw. weder versendet noch zwischengespeichert werden. Dies bietet eine Sicherheit gegenüber unbekannten bzw. nicht vertrauenswürdigen Zählern und/oder Steuereinheiten. Außerdem verhindert dies, dass Nachrichten die verfügbare Speicherkapazität des Repeaters und die verfügbare maximale Sendezeit des Repeaters ausschöpfen bzw. nutzen, die gemäß der Positivliste vom Betreiber des Empfängers gar nicht erforderlich bzw. gewünscht sind.

Weiterhin kann vorgesehen sein, dass das Verfahren zusätzlich den Schritt eines Prüfens einer Belegung des drahtlosen Übertragungskanals, über den die zumindest eine Nachricht versendet wird, vor einem Veranlassen eines Sendens der zumindest einen empfangenen Nachricht umfasst. Insbesondere kann die Überprüfung feststellen, ob der drahtlose Übertragungskanal auf dem Frequenzbereich des Funkprotokollstapels frei oder belegt ist. Dadurch kann zusätzlich vermieden werden, dass Nachrichten selbst bei verfügbarer Sendezeit durch Kollision mit anderen Nachrichten bei einem belegten Übertragungsprotokoll verloren gehen. Das Prüfen der Belegung des drahtlosen Übertragungskanals kann beispielsweise mittels des sog. Carrier Sense Multiple Access/Collision Avoidance Verfahrens erfolgen.

Dabei kann vorgesehen sein, dass ein Veranlassen eines Sendens der zumindest einen empfangenen Nachricht nur dann erfolgt, wenn die Prüfung ergibt, dass der drahtlose Übertragungskanal nicht belegt ist. Bei einer noch nicht zwischengespeicherten Nachricht kann anderenfalls ein lokales Zwischenspeichern der zumindest einen empfangenen Nachricht auf dem Repeater erfolgen. Bei einer bereits zwischengespeicherten Nachricht hingegen kann ein lokales Zwischenspeichern erfolgen, wie es hierin beschrieben wird, selbst wenn Sendezeit verfügbar wäre.

Insbesondere kann vorgesehen sein, dass die zumindest eine Nachricht zumindest einen Zählermesswert enthält. Der Zählermesswert wird als Messwert des Zählers, insbesondere Verbrauchszählers, verstanden. Insbesondere kann der Verbrauch von Wasser, Gas, Wärme und Kälte gemessen werden. Derartige Verbräuche werden in einem oder mehreren Gebäuden, beispielsweise Gebäudekomplexen erfasst.

Insoweit kann ganz besonders vorgesehen sein, dass der zumindest eine Zähler bzw. Verbrauchszähler zumindest einer aus der Gruppe von Gaszähler, Wasserzähler, Wärmezähler und/oder Kältezähler ist. Insbesondere kann es sich jeweils um elektronische Zähler oder zumindest um mit elektronischen Ablesemitteln und drahtlosen Kommunikationsmitteln ausgestattet Zähler handeln. Bei mehreren Zählern, von denen Nachrichten vom Repeater empfangen werden, kann es sich jeweils um die gleiche oder unterschiedliche der Zählertypen dieser Gruppe handeln.

Alternativ oder zusätzlich ist es möglich, dass die zumindest eine Nachricht zumindest einen Steuerwert oder, mit anderen Worten, eine Steuervorgabe von der zumindest einen Steuereinheit aufweist. Dieser kann bei verschiedenen Anwendungen in Gebäuden, wie etwa einer Heizungssteuereinheit, Alarmanlage oder dergleichen, verwendet werden, die als besondere Ausführungsformen von Steuereinheiten in einem oder mehreren Gebäuden in Betracht kommen.

Insbesondere kann der zumindest eine Zähler ein autark betriebener, insbesondere batteriebetriebener Zähler sein. Autark betrieben bedeutet, dass eine autarke Energie- bzw. Stromversorgung zum Einsatz kommt, also insbesondere kein Anschluss des Zählers an ein Stromnetz erfolgt. Ein Beispiel dessen ist ein Zähler mit Batterie oder, mit anderen Worten, ein batteriebetriebener Zähler. Anders als etwa bei typischerweise am Stromnetz angeschlossenen und hierüber mit Energie versorgten Stromzählern können autark betriebene Stromzähler nicht ständig Nachricht senden, weil diese nur über eine begrenzte ihnen zur Verfügung stehende Energiemenge verfügen.

Vorgesehen sein kann ferner, dass der Empfänger eine zentrale Kommunikationseinheit eines intelligenten Messsystems ist. Das intelligente Messsystem ist auch als sog. Smart-Meter-Gateway bekannt. An dem Smart-Meter-Gateway können elektronische Zähler über ein lokales metrologisches Netz (kurz "LMN") angebunden werden. Über ein Weitverkehrsnetz (kurz "WAN") des intelligenten Messsystems können die von den elektronischen Zählern erfassten Zählermesswerte von Wasser, Gas, Wärme und/oder Kälte oder Ähnlichem dann an den Netzbetreiber gesendet werden.

Auch kann vorgesehen sein, dass der Funkprotokollstapel ein Wireless M-Bus-Funkprotokollstapel ist. Der Wireless M-Bus-Funkprotokollstapel hat sich besonders bei Verbrauchszählern in Gebäuden durchgesetzt.

Außerdem kann vorgesehen sein, dass der Frequenzbereich ein lizenzfreier Frequenzbereich ist. Diese insbesondere auch als ISM-Bänder (ISM kurz für "Industrial, Scientific and Medical Band") bezeichneten Frequenzbereiche können unentgeltlich eingesetzt werden. Dafür weisen sie die bereits ausführlich erläuterte Restriktion des maximalen Auslastungsgrades bzw. des Duty-Cycles auf.

Der Frequenzbereich kann insbesondere bei einer Frequenz unter 1.000 MHz, beispielsweise bei 868 MHz, liegen. Diese vergleichsweise geringe Frequenz wird vorteilhafterweise für die Übertragung von (Verbrauchs-)Zählermesswerten genutzt, da die Freiraumdämpfung gering ist und damit eine hohe Reichweite erzielt werden kann. Möglich sind aber auch andere Frequenzbereiche, beispielsweise bei der Frequenz von 433 MHz, die bevorzugt für Steuereinheiten, wie sie hier beschrieben werden, eingesetzt werden können.

Gemäß einem zweiten Aspekt der Erfindung wird die eingangs erwähnte Aufgabe gelöst durch einen Repeater mit Mitteln zur Ausführung des Verfahrens nach einem der Ansprüche 1-9.

Die Mittel können insbesondere einen Computer bzw. eine CPU, beispielsweise in Form eines Mikrocontrollers, umfassen. Ferner können die Mittel einen von dem Computer lesbaren Datenspeicher bzw. ein Speichermedium umfassen, auf dem die empfangenen Nachrichten lokal zwischengespeichert werden können. Ferner kann der Repeater als Mittel ein Kommunikationsmittel, insbesondere eine oder mehrere Antennen, umfassen, welches eine gemeinsame Empfangs- und Sendeeinheit oder voneinander getrennte Empfangs- und Sendeeinheit jeweils zum Empfangen der zumindest einen Nachricht und zum Senden der zumindest einen Nachricht aufweist.

Gemäß einem dritten Aspekt der Erfindung wird die eingangs erwähnte Aufgabe gelöst durch ein System mit einem Repeater nach dem zweiten Aspekt der Erfindung, zumindest einem mit dem Repeater in Kommunikationsverbindung stehenden oder bringbaren Zähler und/oder einer mit dem Repeater in Kommunikationsverbindung stehenden oder bringbaren Steuereinheit in einem oder mehreren Gebäuden und einem Empfänger, an den der Repeater über den drahtlosen Übertragungskanal die zumindest eine Nachricht senden kann.

Wie bereits erläutert kann es sich bei dem Empfänger dabei insbesondere um eine zentrale Kommunikationseinheit eines intelligenten Messsystems handeln.

Gemäß einem vierten Aspekt der Erfindung wird die eingangs erwähnte Aufgabe ferner gelöst durch ein Computerprogramm, umfassend Befehle, die bei der Ausführung des Programms durch einen Computer, dieser einen Repeater veranlasst, das Verfahren nach dem ersten Aspekt der Erfindung auszuführen.

Schließlich wird die eingangs erwähnte Aufgabe gemäß einem fünften Aspekt der Erfindung ferner gelöst durch das computerlesbare Speichermedium, auf dem das Computerprogramm nach dem vierten Aspekt der Erfindung gespeichert ist.

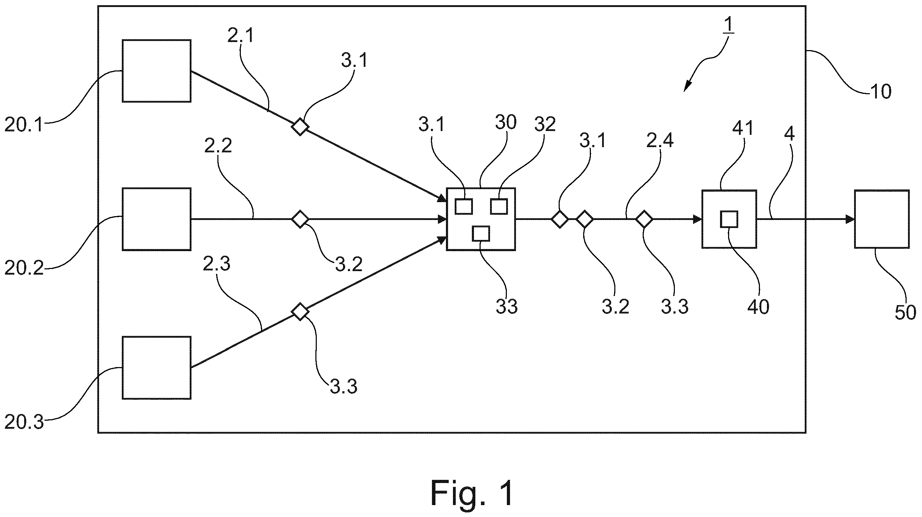

Anhand der beigefügten Zeichnung wird die Erfindung gemäß von Ausführungsbeispielen nachfolgend näher erläutert. Sämtliche aus den Ansprüchen, der Beschreibung oder der Figur hervorgehenden Merkmale, einschließlich konstruktiver Einzelheiten, können sowohl für sich als auch in den beliebigen verschiedenen Kombinationen erfindungswesentlich sein. Figur 1 zeigt dabei eine schematische Darstellung eines Systems gemäß eines Ausführungsbeispiels der Erfindung.

Elemente mit gleicher Funktion und Wirkungsweise werden in der Figur 1 jeweils mit denselben Bezugszeichen versehen. Soweit ein Element mit gleicher Funktion und Wirkungsweise häufiger als einmal vertreten ist, wird es fortlaufend nummeriert, wobei die fortlaufende Nummerierung durch einen Punkt von dem Bezugszeichen getrennt ist.

Figur 1 zeigt schematisch ein System 1 gemäß einem Ausführungsbeispiel der Erfindung. Das System 1 umfasst mehrere Zähler 20.1, 20.2, 20.3 in Form von Verbrauchszählern, die aus der Gruppe von Gaszähler, Wasserzähler, Wärmezähler und/oder Kältezähler sein können. Dabei können die Zähler 20.1, 20.2, 20.3 unterschiedlichen oder selben Zählertyps sein. Rein beispielhaft soll im Folgenden angenommen werden, dass der Zähler 20.1 ein Wasserzähler, der Zähler 20.2 ein Wärmezähler und der Zähler 20.3 ein Gaszähler ist. Sämtliche Zähler 20.1, 20.2, 20.3 sind vorliegend autark betrieben, insbesondere batteriebetrieben.

Die Zähler 20.1, 20.2, 20.3 sind in einem Gebäude 10 angeordnet, können aber auch über mehrere Gebäude oder einen Gebäudekomplex oder dergleichen hinweg verteilt angeordnet sein. Dabei kommt es nicht auf die Art des Gebäudes an. Vielmehr ist entscheidend, dass die Zähler 20.1, 20.2, 20.3 zum Erfassen von Zählermesswerten von einem Energieverbrauch, wie Wasserverbrauch, Wärmeverbrauch, Kälteverbrauch und/oder Gasverbrauch, in einem Gebäude 10 oder mehreren Gebäude 10 angeordnet sein können. Dabei können die Zähler 20.1, 20.2, 20.3 im Gebäude 10 bzw. in den Gebäuden 10 selbst oder am Gebäude 10 bzw. an den Gebäuden 10, also im Nahbereich, angeordnet sein.

Zum System 1 gehören ferner ein Repeater 30 sowie ein intelligentes Messsystem 41. Diese sind vorliegend beispielhaft ebenfalls in dem Gebäude 10 angeordnet, können aber auch in oder an benachbarten Gebäuden 10 oder auch einfach nur im nahen Umfeld angeordnet sein.

Der Repeater 30 weist einen Computer 31, einen Datenspeicher 32 und ein Kommunikationsmittel 33 auf. Auf dem Datenspeicher 32 ist ein Computerprogramm (nicht gezeigt) gespeichert. Das intelligente Messsystem 41 weist als Empfänger 40 eine zentrale Kommunikationseinheit 33 auf, mittels derer die Zählermesswerte, die in Nachrichten 3.1, 3.2, 3.3 von den Zählern 20.1, 20.2, 20.3 enthalten sind, mittels eines gesicherten Weitverkehrsnetzes 4 an einen Netzbetreiber 50 gesendet werden können.

Der Repeater 30 dient der Wiederholung der Nachrichten 3.1, 3.2, 3.3 mit den darin enthaltenen Zählermesswerten, weil die Funkreichweite der drahtlosen Übertragungs- bzw. Kommunikationskanäle 2.1, 2.2, 2.3 am Einbauort der Zähler 20.1, 20.2, 20.3 nicht bis zum intelligenten Messsystem 41 bzw. seiner Kommunikationseinheit 40 reicht.

Für die drahtlosen Übertragungskanäle 2.1, 2.2, 2.3 zwischen den Zählern 20.1, 20.2, 20.3 und dem Repeater 30 bzw. seinem Kommunikationsmittel 33 und dem drahtlosen Übertragungskanal 2.4 zwischen dem Repeater 30 und dem intelligenten Messsystem 41 wird vorliegend beispielhaft ein Wireless M-Bus-Funkprotokollstapel mit einem vorgegebenen Frequenzbereich genutzt. Der vorgegebene Frequenzbereich kann beispielsweise bei einer Frequenz von 868 MHz liegen. Dies ist ein lizenzfreier Frequenzbereich. Er unterliegt einer Restriktion hinsichtlich des sog. "Duty-Cycles" bzw. weist er einen maximalen Auslastungsgrad bzgl. der Sendezeit auf. Der maximale Auslastungsgrad ist definiert durch das Verhältnis einer zulässigen Sendezeit zu einer vorgegebenen Zeitperiode, beispielsweise einer Stunde. Die Sendezeit ist die Zeit, in der der Repeater 30 Nachrichten 3.1, 3.2, 3.3 in dem Frequenzbereich des drahtlosen Übertragungskanals 2.4 an das intelligente Messsystem 41 übertragen kann. Mit anderen Worten ist durch den maximalen Auslastungsgrad vorgegeben, wie lange der Repeater 30 pro vorgegebener Zeitperiode Nachrichten 3.1, 3.2, 3.3, 3.4 in dem Frequenzbereich des genutzten Wireless-M-Bus-Funkprotokollstapels senden darf. Vorliegend soll zur einfacheren Beschreibung beispielhaft davon ausgegangen werden, dass der maximale Auslastungsgrad 0,1 % beträgt. Das heißt, dass der Repeater 30 eine Sendezeit von 0,1 % je sich wiederholender Zeitperiode hat, die vorliegend rein beispielhaft als eine Stunde gewählt wird. Der Repeater 30 darf entsprechend je Stunde 3,6 Sekunden senden bzw. hat eine erlaubte Sendezeit von 3,6 Sekunden je Stunde, um die Nachrichten 3.1, 3.2, 3.3, die er von den Zählern 20.1, 20.2, 20.3 empfängt, an das intelligente Messsystem 41 zu übertragen.

In einem Verfahren gemäß einem Ausführungsbeispiel der Erfindung ist nun vorgesehen, dass der Repeater 30 die Nachrichten 3.1, 3.2, 3.3 empfängt, was durch das Kommunikationsmittel 33 erledigt wird. Der Computer 31 des Repeaters 30 bestimmt dann einen aktuellen Auslastungsgrad für den Frequenzbereich des drahtlosen Übertragungskanals 2.4, das heißt also, die bisherige Sendezeit des Repeaters 30 innerhalb der vordefinierten Zeitperiode von einer Stunde. Dann vergleicht der Computer 31 die bisherige Sendezeit bzw. den aktuellen Auslastungsgrad mit der maximalen Sendezeit bzw. dem maximalen Auslastungsgrad in der laufenden Stunde bzw. Zeitperiode. Dann veranlasst der Computer 31 das Senden bzw. Weiterleiten der empfangenen der Nachrichten 3.1, 3.2, 3.3, wenn der maximale Auslastungsgrad noch nicht ermittelt ist. Vorgesehen sein kann aber auch, dass der Computer 31 die benötigte Sendezeit für die jeweiligen Nachrichten 3.1, 3.2, 3.3 ermittelt und ein Senden der jeweiligen Nachrichten 3.1, 3.2, 3.3 über den drahtlosen Übertragungskanal 2.4 an das intelligente Messsystem 41 erst dann veranlasst, wenn noch ausreichend Sendezeit verfügbar ist, ohne die maximale Sendezeit zu überschreiten. Anderenfalls erfolgt ein lokales Zwischenspeichern von denjenigen Nachrichten 3.1, 3.2, 3.3 in der laufenden Zeitperiode, die nicht ohne Überschreitung der maximalen Sendezeit versendet werden können. Zu einer späteren Zeitperiode bzw. Stunde können die zwischengespeicherten Nachrichten 3.1, 3.2, 3.3 versendet werden, wenn wieder Sendezeit verfügbar ist bzw. der aktuelle Auslastungsgrad so weit unterhalb des maximalen Auslastungsgrads liegt, dass die zwischengespeicherten Nachrichten 3.1, 3.2, 3.3 ohne Überschreiten des maximalen Auslastungsgrads vom Repeater 30 an das intelligente Messsystem 41 gesendet werden können.

Das Verfahren wird im Folgenden an einem konkreten Beispiel und mit Verweis auf Fig. 1 näher erläutert, bei dem zu Beginn angenommen werden soll, dass die bisherige Sendezeit 3,4 Sekunden ist und eine Zeitperiode von einer Stunde betrachtet wird, bei der 3,6 Sekunden Sendezeit zur Verfügung stehen. Die beispielhaften Zahlen, insbesondere Sendezeiten, sind rein fiktiv derart gewählt, dass ein Verständnis vom Verfahren erleichtert wird.

Als erstes kommt die Nachricht 3.1 beim Repeater 30 an, die einen Wasserzählermesswert des als Wasserzähler ausgebildeten Zählers 20.1 beinhaltet. Nun wird der aktuelle Auslastungsgrad bestimmt, der vorliegend beispielhaft 3,4 Sekunden bisheriger Sendezeit von 3,6 Sekunden maximaler Sendezeit in dieser Stunde beträgt. Der Computer 31 veranlasst das sofortige Senden der Nachricht 3.1 vom Repeater 30 bzw. mittels der Kommunikationseinheit 33 an den Empfänger 40. Die neue, aktuelle bisherige Sendezeit beträgt nun 3,4 + 0,1 = 3,5 Sekunden in der laufenden Stunde.

Der selbige Ablauf wie bei der Nachricht 3.1 erfolgt nun bei der Nachricht 3.2 mit Hinblick auf den Wärmezählermesswert des als Wärmezähler ausgebildeten Zählers 20.2. Auch hier erfolgt ein sofortiges Wiederholen bzw. Senden der Nachricht 3.2 vom Repeater 30 an das intelligente Messsystem 41. Die neue, aktuelle bisherige Sendezeit beträgt nun 3,5 + 0,1 = 3,6 Sekunden. Der maximale Auslastungsgrad ist dadurch erreicht.

Für das Senden bzw. Weiterleiten der Nachricht 3.1 steht keine Sendezeit mehr zur Verfügung, weil der maximale Auslastungsgrad erreicht ist. Diese Nachricht 3.3 wird zwischengespeichert. Dabei ist es unerheblich, ob die Nachrichten 3.1, 3.2, 3.3 verschlüsselt sind, was der Fall sein kann oder nicht, weil die Nachrichten 3.1, 3.2, 3.3 lediglich weitergeleitet bzw. zwischengespeichert, nicht jedoch vom Repeater 30 gelesen werden.

Zu Beginn der folgenden Stunde bzw. Zeitperiode kann die zwischengespeicherte Nachricht 3.3 dann vom Repeater 30 an den Empfänger 41 versendet werden, weil der aktuelle Auslastungsgrad dann wieder null beträgt bzw. noch keine Sendezeit von der maximalen Sendezeit in Anspruch genommen worden ist.

### Bezugszeichenliste

- 1: System
- 2: drahtloser Übertragungskanal
- 3: Nachricht
- 4: Weitverkehrsnetz
- 10: Gebäude
- 20: Zähler
- 30: Repeater
- 31: Computer
- 32: Speichermedium
- 33: drahtlose Kommunikationseinheit
- 40: Empfänger, zentrale Kommunikationseinheit
- 41: intelligentes Messsystem
- 50: Netzbetreiber

## Patentansprüche

1. Verfahren zum drahtlosen Senden von zumindest einer Nachricht (3) von einem Repeater (30) an einen Empfänger (40) über einen drahtlosen Übertragungskanal (2), wobei der drahtlose Übertragungskanal (2) auf einem Funkprotokollstapel mit einem vorgegebenen Frequenzbereich und einem maximalen Auslastungsgrad des Frequenzbereichs durch den Repeater (30) basiert, wobei der maximale Auslastungsgrad eine maximale Sendezeit des Repeaters (30) für sich wiederholende und in ihrer Dauer vordefinierte Zeitperioden vorgibt, wobei das Verfahren die folgenden Schritte aufweist:
- Empfangen der zumindest einen Nachricht (3) von zumindest einem Zähler (20) und/oder zumindest einer Steuereinheit eines oder mehrerer Gebäude (10) durch den Repeater (30),
- Bestimmen eines aktuellen Auslastungsgrades des Frequenzbereichs des drahtlosen Übertragungskanals (2) durch den Repeater (30), wobei der aktuelle Auslastungsgrad eine bisherige Sendezeit des Repeaters (30) in einer aktuellen der sich wiederholenden und vordefinierten Zeitperioden angibt, und
- lokales Zwischenspeichern der zumindest einen empfangenen Nachricht (3) auf dem Repeater (30), sofern der aktuelle Auslastungsgrad den maximalen Auslastungsgrad erreicht hat oder der aktuelle Auslastungsgrad durch Senden der zumindest einen empfangenen Nachricht (3) den maximalen Auslastungsgrad überschreiten würde
- Veranlassen eines Sendens der zumindest einen empfangenen und lokal auf dem Repeater (30) zwischengespeicherten Nachricht (3), sobald der aktuelle Auslastungsgrad unterhalb des maximalen Auslastungsgrad liegt und der aktuelle Auslastungsgrad durch Senden der zumindest einen empfangenen Nachricht (3) den maximalen Auslastungsgrad nicht überschreiten würde, wobei verschiedenen empfangenen Nachrichten (3) zugehörige Adressen von Zählern (20) und/oder Steuereinheiten mit einer vorgegebenen Priorisierung von verschiedenen Adressen von Zählern (20) und/oder Steuereinheiten verglichen werden und das Veranlassen des Sendens der mehreren empfangenen Nachrichten (3) in einer der vorgegebenen Priorisierung folgenden Reihenfolge erfolgt, wobei die vorgegebene Priorisierung auf Basis einer Häufigkeit des Empfangs der jeder Adresse zugehörigen Nachrichten (3) in einer vorbestimmten Zeitperiode bestimmt wird.

2. Verfahren nach Anspruch 1, wobei eine der zumindest einen empfangenen Nachricht (3) zugehörige Adresse des zumindest einen Zählers (20) und/oder der zumindest einen Steuereinheit mit einer Positivliste von verschiedenen Adressen von Zählern (20) und/oder Steuereinheiten verglichen wird und das Veranlassen des Sendens oder das lokale Zwischenspeichern der zumindest einen empfangenen Nachricht (3) nur dann erfolgt, wenn die der zumindest einen empfangenen Nachricht (3) zugehörige Adresse sich auf der Positivliste befindet.

3. Verfahren nach einem der voranstehenden Ansprüche, wobei das Verfahren ferner den Schritt eines Prüfens einer Belegung des drahtlosen Übertragungskanals (2), über den die zumindest eine Nachricht (3) versendet wird, vor einem Veranlassen eines Sendens der zumindest einen empfangenen Nachricht (3) umfasst, insbesondere ein Veranlassen eines Sendens der zumindest einen empfangenen Nachricht (3) nur dann erfolgt, wenn die Prüfung ergibt, dass der drahtlose Übertragungskanal (2) nicht belegt ist und anderenfalls ein lokales Zwischenspeichern der zumindest einen empfangenen Nachricht (3) auf dem Repeater (30) erfolgt.

4. Verfahren nach einem der voranstehenden Ansprüche, wobei die zumindest eine Nachricht (3) zumindest einen Zählermesswert enthält.

5. Verfahren nach einem der voranstehenden Ansprüche, wobei der zumindest eine Zähler (20) zumindest einer aus der Gruppe von Gaszähler, Wasserzähler, Wärmezähler und/oder Kältezähler ist.

6. Verfahren nach einem der voranstehenden Ansprüche, wobei der zumindest eine Zähler (20) ein autark betriebener, insbesondere batteriebetriebener, Zähler (20) ist.

7. Verfahren nach einem der voranstehenden Ansprüche, wobei der Empfänger (40) eine zentrale Kommunikationseinheit (40) eines intelligenten Messsystems (41) ist.

8. Verfahren nach einem der voranstehenden Ansprüche, wobei der Funkprotokollstapel ein Wireless M-Bus-Funkprotokollstapel ist.

9. Verfahren nach einem der voranstehenden Ansprüche, wobei der Frequenzbereich ein lizenzfreier Frequenzbereich ist und/oder unterhalb von 1.000 MHz liegt.

10. Repeater (30) mit Mitteln zur Ausführung des Verfahrens nach einem der voranstehenden Ansprüche.

11. System (1) mit einem Repeater (30) nach Anspruch 10, zumindest einem mit dem Repeater (30) in Kommunikationsverbindung stehenden oder bringbaren Zähler (20) und/oder zumindest einer mit dem Repeater (30) in Kommunikationsverbindung stehenden oder bringbaren Steuereinheit in einem oder mehreren Gebäuden (10) und einem Empfänger (40), an den der Repeater (30) über den drahtlosen Übertragungskanal (2) die zumindest eine Nachricht (3) senden kann.

12. Computerprogramm, umfassend Befehle, die bei der Ausführung des Programms durch einen Computer (31) dieser einen Repeater veranlasst, das Verfahren nach einem der Ansprüche 1 - 9 auszuführen.

13. Computerlesbares Speichermedium (32), auf dem das Computerprogramm nach Anspruch 12 gespeichert ist.

## Claims

1. A method of wirelessly transmitting at least one message (3) from a repeater (30) to a receiver (40) over a wireless transmission channel (2), the wireless transmission channel (2) being based on a radio protocol stack having a predetermined frequency range and a maximum utilization level of the frequency range by the repeater (30), the maximum utilization level specifying a maximum transmission time of the repeater (30) for repetitive and predefined duration time periods, the method comprising the following steps:
- receiving at least one message (3) from at least one meter (20) and/or at least one control unit of one or more buildings (10) by the repeater (30),
- determining a current utilization level of the frequency range of the wireless transmission channel (2) by the repeater (30), wherein the current utilization level indicates a previous transmission time of the repeater (30) in a current one of the repetitive and predefined time periods, and
- local buffering of the at least one received message (3) on the repeater (30) if the current utilization level has reached the maximum utilization level or the current utilization level would exceed the maximum utilization level by transmitting the at least one received message (3),
- initiating transmission of the at least one received message (3) temporarily stored locally on the repeater (30) as soon as the current utilization level is below the maximum utilization level and the current utilization level would not exceed the maximum utilization level by transmitting the at least one received message (3),
wherein addresses of meters (20) and/or control units associated with different received messages (3) are compared with a predetermined prioritization of different addresses of meters (20) and/or control units, and causing transmission of the plurality of received messages (3) in an order following the predetermined prioritization, wherein the predetermined prioritization is determined based on a frequency of reception of the messages (3) associated with each address in a predetermined time period.

2. Method according to claim 1, wherein an address of the at least one meter (20) and/or the at least one control unit associated with the at least one received message (3) is compared with a positive list of different addresses of meters (20) and/or control units and the initiation of the transmission or the local buffering of the at least one received message (3) only takes place if the address associated with the at least one received message (3) is on the positive list.

3. Method according to any one of the preceding claims, wherein the method further comprises the step of checking an occupancy of the wireless transmission channel (2) over which the at least one message (3) is sent, before causing transmission of the at least one received message (3), wherein in particular
transmission of the at least one received message (3) is initiated only if the checking shows that the wireless transmission channel (2) is not occupied and otherwise the at least one received message (3) is buffered locally on the repeater (30).

4. Method according to one of the preceding claims, wherein the at least one message (3) contains at least one meter reading.

5. Method according to one of the preceding claims, wherein the at least one meter (20) is at least one of the group of gas meters, water meters, heat meters and/or cooling meters.

6. Method according to one of the preceding claims, wherein the at least one meter (20) is an autonomously operated, in particular battery-operated, meter (20).

7. Method according to one of the preceding claims, wherein the receiver (40) is a central communication unit (40) of an intelligent measuring system (41).

8. Method according to any one of the preceding claims, wherein the radio protocol stack is a wireless M-Bus radio protocol stack.

9. Method according to one of the preceding claims, wherein the frequency range is a license-free frequency range and/or is below 1,000 MHz.

10. A repeater (30) comprising means for carrying out the method according to any one of the preceding claims.

11. System (1) with a repeater (30) according to claim 10, at least one meter (20) in communication with the repeater (30) and/or at least one control unit in one or more buildings (10) in communication with the repeater (30), and a receiver (40) to which the repeater (30) can send the at least one message (3) via the wireless transmission channel (2).

12. A computer program comprising instructions which, when the program is executed by a computer (31), the computer causes a repeater (30) to execute the method according to any one of claims 1 - 9.

13. A computer-readable storage medium (32) on which the computer program according to claim 12 is stored.

## Revendications

1. Procédé de transmission sans fil d'au moins un message (3) d'un répéteur (30) à un récepteur (40) par l'intermédiaire d'un canal de transmission sans fil (2), le canal de transmission sans fil (2) étant basé sur une pile de protocoles radio ayant une plage de fréquences prédéterminée et un taux d'utilisation maximal de la plage de fréquences par le répéteur (30), le taux d'utilisation maximal définissant un temps d'émission maximal du répéteur (30) pour des périodes de temps répétitives et prédéfinies dans leur durée, le procédé comprenant les étapes suivantes :
- La réception par le répéteur (30) de l'au moins un message (3) provenant d'au moins un compteur (20) et/ou d'au moins une unité de commande d'un ou plusieurs bâtiments (10),
- Déterminer un taux d'utilisation actuel de la plage de fréquences du canal de transmission sans fil (2) par le répéteur (30), le taux d'utilisation actuel indiquant un temps d'émission passé du répéteur (30) dans une période actuelle des périodes de temps répétitives et prédéfinies, et
- la mémorisation temporaire locale de l'au moins un message reçu (3) sur le répéteur (30), dans la mesure où le taux d'utilisation actuel a atteint le taux d'utilisation maximal ou que le taux d'utilisation actuel dépasserait le taux d'utilisation maximal par l'envoi de l'au moins un message reçu (3),
- déclenchement de l'envoi d'au moins un message (3) reçu et stocké temporairement localement sur le répéteur (30) soit envoyé dès que le taux d'utilisation actuel est inférieur au taux d'utilisation maximal et que le taux d'utilisation actuel ne dépasserait pas le taux d'utilisation maximal en envoyant l'au moins un message (3) reçu,
dans lequel des adresses de compteurs (20) et/ou d'unités de commande associées à différents messages reçus (3) sont comparées à une priorisation prédéterminée de différentes adresses de compteurs (20) et/ou d'unités de commande, et le déclenchement de l'envoi de la pluralité de messages reçus (3) est effectué dans un ordre suivant la priorisation prédéterminée, la priorisation prédéterminée étant déterminée sur la base d'une fréquence de réception des messages (3) associés à chaque adresse dans une période de temps prédéterminée.

2. Procédé selon la revendication 1, dans lequel une adresse de l'au moins un compteur (20) et/ou de l'au moins une unité de commande associée à l'au moins un message reçu (3) est comparée à une liste positive de différentes adresses de compteurs (20) et/ou d'unités de commande et l'initiation de l'émission ou la mémorisation temporaire locale de l'au moins un message reçu (3) n'a lieu que si l'adresse associée à l'au moins un message reçu (3) se trouve sur la liste positive.

3. Procédé selon l'une quelconque des revendications précédentes, le procédé comprenant en outre l'étape consistant à vérifier une occupation du canal de transmission sans fil (2) par l'intermédiaire duquel ledit au moins un message (3) est envoyé, avant de provoquer une émission dudit au moins un message reçu (3), en particulier
un déclenchement d'une émission de l'au moins un message reçu (3) n'a lieu que si le contrôle montre que le canal de transmission sans fil (2) n'est pas occupé et, sinon, une mémorisation intermédiaire locale de l'au moins un message reçu (3) a lieu sur le répéteur (30).

4. Procédé selon l'une quelconque des revendications précédentes, dans lequel ledit au moins un message (3) contient au moins une valeur de mesure de compteur.

5. Procédé selon l'une quelconque des revendications précédentes, dans lequel ledit au moins un compteur (20) est au moins l'un parmi un compteur de gaz, un compteur d'eau, un compteur de chaleur et/ou un compteur de froid.

6. Procédé selon l'une des revendications précédentes, dans lequel l'au moins un compteur (20) est un compteur (20) fonctionnant de manière autonome, en particulier sur batterie.

7. Procédé selon l'une des revendications précédentes, dans lequel le récepteur (40) est une unité de communication centrale (40) d'un système de mesure intelligent (41).

8. Procédé selon l'une quelconque des revendications précédentes, dans lequel la pile de protocoles radio est une pile de protocoles radio M-Bus sans fil.

9. Procédé selon l'une quelconque des revendications précédentes, dans lequel la plage de fréquences est une plage de fréquences sans licence et/ou est inférieure à 1000 MHz.

10. Répéteur (30) comprenant des moyens pour mettre en œuvre le procédé selon l'une quelconque des revendications précédentes.

11. Système (1) comprenant un répéteur (30) selon la revendication 10, au moins un compteur (20) en liaison de communication ou pouvant être amené avec le répéteur (30) et/ou au moins une unité de commande en liaison de communication ou pouvant être amenée avec le répéteur (30) dans un ou plusieurs bâtiments (10) et un récepteur (40) auquel le répéteur (30) peut envoyer l'au moins un message (3) via le canal de transmission sans fil (2).

12. Programme informatique comprenant des instructions qui, lorsque le programme est exécuté par un ordinateur (31), amènent ce dernier à demander à un répéteur d'exécuter le procédé selon l'une quelconque des revendications 1 - 9.

13. Support de stockage lisible par ordinateur (32) sur lequel est stocké le programme d'ordinateur selon la revendication 12.
